# FASCICULE DE BREVET EUROPEEN

(11) **EP 4 346 036 B1**
(45) Date de publication et mention de la délivrance du brevet: **18.06.2025**
(21) Numéro de dépôt: 23199776.8
(22) Date de dépôt: 26.09.2023
(51) Int. Cl.: H02B 1/38, H02B 1/30

(54) **ACCESSOIRE DE PROTECTION POUR PORTE D'ARMOIRE ÉLECTRIQUE, PORTE ET ARMOIRE ÉLECTRIQUE INTÉGRANT LEDIT ACCESSOIRE**
SCHUTZZUBEHÖR FÜR DIE TÜR EINES SCHALTSCHRANKS, TÜR UND SCHALTSCHRANK MIT SOLCHEM SCHUTZZUBEHÖR
PROTECTION ACCESSORY FOR ELECTRICAL CABINET DOOR, DOOR AND ELECTRICAL CABINET COMPRISING SUCH PROTECTION ACCESSORY

(30) Priorité: 27.09.2022 FR 2209801
(43) Date de publication de la demande: 03.04.2024
(73) Titulaire: HAGER-ELECTRO SAS, 67210 Obernai (FR)
(72) Inventeur: BLAISE, Bertrand, 67300 Schiltigheim (FR); CHAMBOSSE, Cyrill, 67520 Marlenheim (FR); DI LAURO, Maxime, 67600 Sélestat (FR); HOUTMANN, Alexandre, 67300 Schiltigheim (FR); KETTERER, Olivier, 67200 Strasbourg (FR)
(74) Mandataire: Cabinet Nuss

(56) Documents cités:
- EP-A1- 0 387 973
- US-A- 3 075 061
- US-B1- 9 461 446

## Description

La présente invention concerne le domaine des accessoires de protection pour porte d'armoire électrique, le domaine des portes d'armoire électrique et le domaine des armoires électriques.

Dans le domaine des équipements électriques résidentiels et tertiaires, l'on connaît des appareillages électriques de protection, tels que des disjoncteurs, qui sont installés dans des armoires électriques qui peuvent être fermées par une porte. De tels appareillages électriques de protection peuvent dans certaines situations nécessiter un accès direct à travers la porte de l'armoire électrique, tout en garantissant une protection par exemple avec un indice de protection IP3X de ces appareillages électriques de protection. Pour ce faire, il est connu de ménager une fenêtre dans la porte de l'armoire électrique et de munir le bord de celle-ci d'un accessoire de protection comprenant un cadre muni d'un joint en caoutchouc qui confère une protection d'indice IP3X autour de l'appareillage électrique de protection. US 3 075 061 A, EP 0 387 973 A1 et US 9 461 446 B1 divulguent des exemples de tels arrangements.

Or, de tels appareillages électriques de protection peuvent soit être fixes, soit être débrochables. Les appareillages électriques de protection dits débrochables sont connus pour pouvoir adopter plusieurs positions relativement à leur châssis en plus de la position connectée correspondant à la position fixe des appareillages électriques de protection fixes, dans laquelle la partie puissance de l'appareillage électrique de protection est rentrée à l'intérieur du châssis. En effet, les appareillages électriques de protection dits débrochables peuvent en outre adopter une position déconnectée, dans laquelle la partie puissance de l'appareillage électrique de protection est saillante du châssis.

La solution connue de l'art antérieur permet uniquement l'ouverture et la fermeture de la porte de l'armoire électrique si l'appareillage électrique de protection est dans la position fixe ou dans la position connectée sans risquer de dégrader le joint en caoutchouc et en maintenant une protection d'indice IP3X.

Cette solution n'est donc pas optimale notamment dans le cas où l'appareillage électrique de protection est débrochable et est dans la position déconnectée, puisque dans ce cas le joint en caoutchouc peut subir une usure. Le maintien d'une protection d'indice IP3X ne peut donc pas être assuré..

La présente invention a pour but de pallier au moins l'un de ces inconvénients et de proposer une solution qui permette de garantir une protection de préférence d'indice IP3X autour de l'appareillage électrique de protection quelle que soit la position de ce dernier dans son châssis, et qui permette l'ouverture et la fermeture de la porte de l'armoire électrique intégrant l'accessoire de protection quelle que soit la position de l'appareillage électrique de protection dans son châssis.

A cet effet, l'invention concerne un accessoire de protection pour porte d'armoire électrique, ledit accessoire de protection comportant un cadre, de préférence de forme rectangulaire, comprenant au moins :
une ouverture principale,
une première bordure et une deuxième bordure s'étendant longitudinalement selon une première direction, parallèles entre elles et espacées l'une de l'autre,
une troisième bordure et une quatrième bordure s'étendant longitudinalement selon une deuxième direction sensiblement perpendiculaire à la première direction, parallèles entre elles, espacées l'une de l'autre et reliant chacune la première bordure à la deuxième bordure,
la première bordure, la deuxième bordure, la troisième bordure et la quatrième bordure délimitant ladite ouverture principale,
ledit accessoire de protection est caractérisé en ce qu'il comprend en outre au moins :
   un premier volet configuré pour occulter partiellement l'ouverture principale dans une position initiale et étant monté mobile autour d'un premier axe de rotation parallèle à la première direction sur la première bordure entre la position initiale et une position d'ouverture maximale,
   un deuxième volet configuré pour occulter partiellement l'ouverture principale dans une position initiale et étant monté mobile autour d'un deuxième axe de rotation parallèle à la première direction sur la deuxième bordure entre la position initiale et la position d'ouverture maximale,
   un premier organe de rappel configuré pour permettre le retour automatique de la position d'ouverture maximale vers la position initiale du premier volet,
   un deuxième organe de rappel configuré pour permettre le retour automatique de la position d'ouverture maximale vers la position initiale du deuxième volet.

L'invention concerne également une porte pour armoire électrique comprenant une fenêtre configurée pour former un passage d'une face avant d'un appareillage électrique de protection, caractérisé en ce que la porte comprend ledit accessoire de protection selon l'invention et en ce que le cadre est monté sur la fenêtre.

L'invention concerne également une armoire électrique comprenant la porte mobile en rotation autour d'un axe de pivotement entre une position fermée et une position ouverte, caractérisée en ce que ladite porte est selon l'invention.

L'invention concerne également un ensemble comprenant l'armoire électrique comprenant ledit accessoire de protection et ledit appareillage électrique de protection, ledit appareillage électrique de protection comprenant un châssis et une partie puissance comportant une face avant, laquelle partie puissance étant apte et destinée à être reçue dans le châssis, en étant mobile relativement au châssis entre une position connectée et une position déconnectée, caractérisé en ce que ladite armoire électrique est selon l'invention, ledit accessoire est selon l'invention et en ce que :
dans la position fermée de la porte et dans la position connectée de l'appareillage électrique de protection, la face avant est entourée par le cadre et est saillante dans la première ouverture, et le premier volet et le deuxième volet formant une barrière configurée pour empêcher de donner accès à l'appareillage électrique de protection, au moins par deux bords latéraux de la face avant,
dans la position fermée de la porte et dans la position déconnectée de l'appareillage électrique de protection, la face avant est entourée par le cadre et est davantage saillante de la première ouverture que dans la position connectée, et le premier volet et le deuxième volet formant une barrière configurée pour empêcher de donner accès à l'appareillage électrique de protection, au moins par deux bords latéraux de la face avant.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
[Fig. 1] la figure 1 représente une vue en perspective d'une armoire électrique selon l'invention contenant un appareillage électrique de protection débrochable et comprenant une porte dans une position fermée munie d'un accessoire de protection selon une deuxième variante de réalisation de l'invention,
[Fig. 2] la figure 2 représente une vue de face de l'armoire électrique de la figure 1,
[Fig. 3] la figure 3 représente une vue en perspective avant de l'accessoire de protection selon une première variante de réalisation de l'invention muni d'un obturateur,
[Fig. 4] la figure 4 représente une vue en perspective arrière de l'accessoire de protection selon la première variante de réalisation de l'invention muni de l'obturateur,
[Fig. 5] la figure 5 représente une vue en perspective avant de l'accessoire de protection selon la deuxième variante de réalisation de l'invention,
[Fig. 6] la figure 6 représente une vue en perspective arrière de l'accessoire de protection selon la deuxième variante de réalisation de l'invention,
[Fig. 7] la figure 7 représente une vue en perspective de l'accessoire de protection selon la deuxième variante de réalisation de l'invention et qui est associé à un appareillage électrique de protection débrochable dans une position connectée,
[Fig. 8] la figure 8 représente une vue en perspective de l'accessoire de protection selon la deuxième variante de réalisation de l'invention et qui est associé à un appareillage électrique de protection débrochable dans une position déconnectée,
[Fig. 9] la figure 9 représente une vue en perspective arrière de l'accessoire de protection selon la deuxième variante de réalisation de l'invention,
[Fig. 10] la figure 10 représente une vue en perspective du détail A de la figure 9,
[Fig. 11] la figure 11 représente une vue de côté et en coupe de la figure 9,
[Fig. 12] la figure 12 représente une vue de dessus et en coupe de l'armoire électrique selon l'invention contenant l'appareillage électrique de protection débrochable dans la position connectée et comprenant la porte dans une position ouverte munie de l'accessoire de protection selon la deuxième variante de réalisation de l'invention,
[Fig. 13] la figure 13 représente une vue de dessus et en coupe de l'armoire électrique selon l'invention contenant l'appareillage électrique de protection débrochable dans la position déconnectée et comprenant la porte dans une position ouverte munie de l'accessoire de protection selon la deuxième variante de réalisation de l'invention,
[Fig. 14] la figure 14 représente une vue de dessus et en coupe de l'armoire électrique selon l'invention contenant l'appareillage électrique de protection débrochable dans la position déconnectée et comprenant la porte dans une position ouverte munie de l'accessoire de protection selon la deuxième variante de réalisation de l'invention,
[Fig. 15] la figure 15 représente une vue en perspective du détail Z de la figure 14, et
[Fig. 16] la figure 16 représente une vue en perspective et en éclatée d'une partie de l'accessoire de protection selon la deuxième variante de réalisation de l'invention.

L'invention concerne un accessoire de protection pour porte 1 d'armoire électrique 2.

Ledit accessoire de protection comporte un cadre 3, de préférence de forme rectangulaire, comprenant au moins :
une ouverture principale 4,
une première bordure 5 et une deuxième bordure 6 s'étendant longitudinalement selon une première direction D1, parallèles entre elles et espacées l'une de l'autre,
une troisième bordure 7 et une quatrième bordure 8 s'étendant longitudinalement selon une deuxième direction D2 sensiblement perpendiculaire à la première direction D1, parallèles entre elles, espacées l'une de l'autre et reliant chacune la première bordure 5 à la deuxième bordure 6,
la première bordure 5, la deuxième bordure 6, la troisième bordure 7 et la quatrième bordure 8 délimitant ladite ouverture principale 4.

Conformément à l'invention, ledit accessoire de protection est caractérisé en ce qu'il comprend en outre au moins :
un premier volet 9 configuré pour occulter partiellement l'ouverture principale 4 dans une position initiale PI et étant monté mobile autour d'un premier axe de rotation A1 parallèle à la première direction D1 sur la première bordure 5 entre la position initiale PI et une position d'ouverture maximale,
un deuxième volet 10 configuré pour occulter partiellement l'ouverture principale 4 dans une position initiale PI et étant monté mobile autour d'un deuxième axe de rotation A2 parallèle à la première direction D1 sur la deuxième bordure 6 entre la position initiale PI et la position d'ouverture maximale,
un premier organe de rappel 11 configuré pour permettre le retour automatique de la position d'ouverture maximale vers la position initiale PI du premier volet 9,
un deuxième organe de rappel 12 configuré pour permettre le retour automatique de la position d'ouverture maximale vers la position initiale PI du deuxième volet 10.

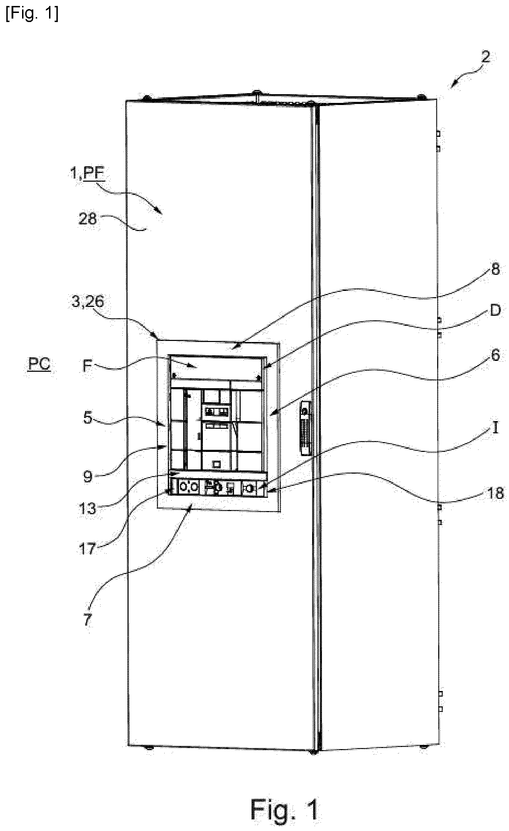

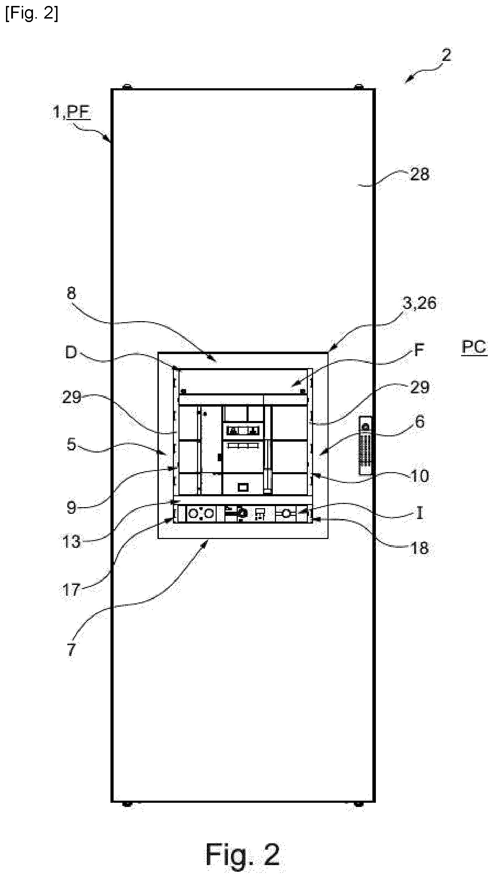

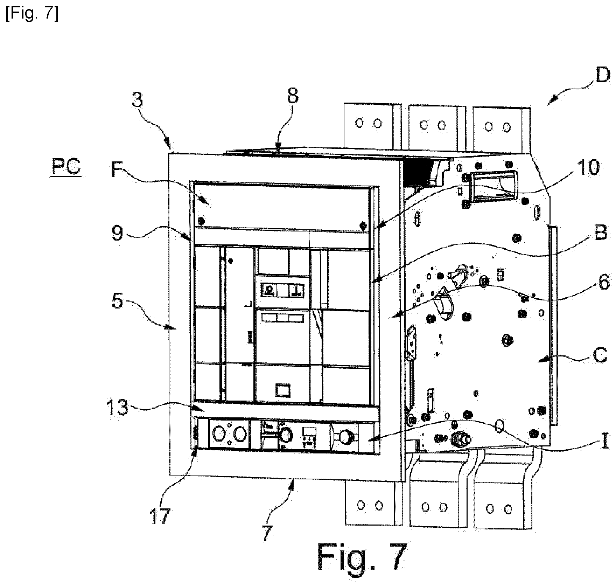

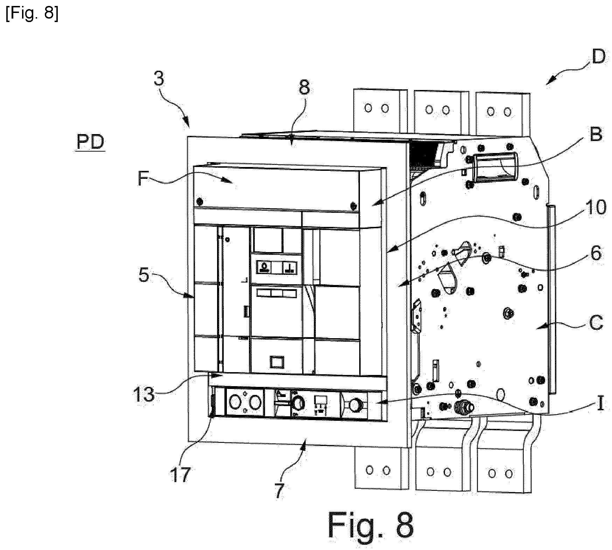

L'invention est particulièrement adaptée pour des armoires électriques 2 comportant une porte 1 et qui sont destinées à recevoir au moins un appareillage électrique de protection D qui est débrochable selon une première possibilité et comme l'illustrent les figures 1 et 2 ou qui est fixe selon une deuxième possibilité (non représentée). De manière connue et comme l'illustrent les figures 7 et 8, un appareillage électrique de protection D comprend un châssis C qui est destiné à être fixé dans l'armoire électrique 2 et une partie puissance avec une face avant F, laquelle partie puissance peut être reçue dans le châssis C.

Selon la première possibilité qui est visible aux figures 1, 2, 7 et 8, la partie puissance de l'appareillage électrique de protection D est mobile relativement au châssis C entre une position connectée PC (figure 7), dans laquelle la partie puissance est reçue totalement dans le châssis C et une position déconnectée PD (figure 8), dans laquelle la partie puissance est reçue partiellement dans le châssis C. Dans la position déconnectée PD, la face avant F est davantage saillante du châssis C que dans la position connectée PC.

Selon la deuxième possibilité, la partie puissance et le châssis C sont fixes dans l'armoire électrique 2.

Avantageusement et grâce à la configuration de l'invention, le premier volet 9 et le deuxième volet 10 permettent tout d'abord de garantir une protection, de préférence d'indice IP3X, en formant une barrière qui empêche de donner accès à l'appareillage électrique de protection D, au moins par deux bords latéraux B de la face avant F, lorsque l'appareillage électrique de protection D est débrochable et est dans la position connectée PC et que la porte 1 de l'armoire électrique 2 est dans la position fermée PF, comme l'illustrent les figures 1, 2 et 7 ou lorsque l'appareillage électrique de protection D est débrochable et est dans la position déconnectée PD et que la porte 1 de l'armoire électrique 2 est dans la position fermée PF, comme l'illustre la figure 8 ou lorsque l'appareillage électrique de protection D est fixe (non représenté) et que la porte 1 de l'armoire électrique 2 est dans la position fermée PF.

En effet, le premier organe de rappel 11 et le deuxième organe de rappel 12 permettent respectivement de ramener en permanence le premier volet 9 et deuxième volet 10 dans leur position initiale PI afin de garantir que le premier volet 9 et deuxième volet 10 restent en contact avec les bords latéraux B de la face avant F de l'appareillage électrique de protection D et ainsi de garantir une protection de préférence d'indice IP3X.

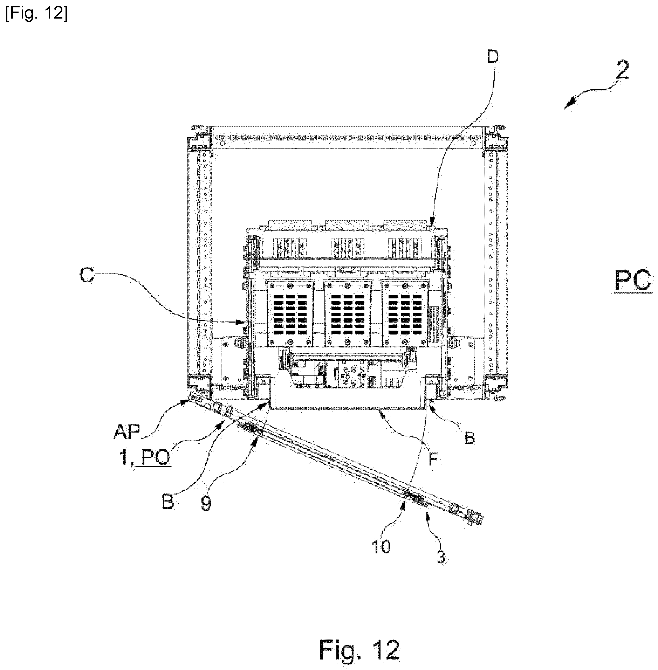

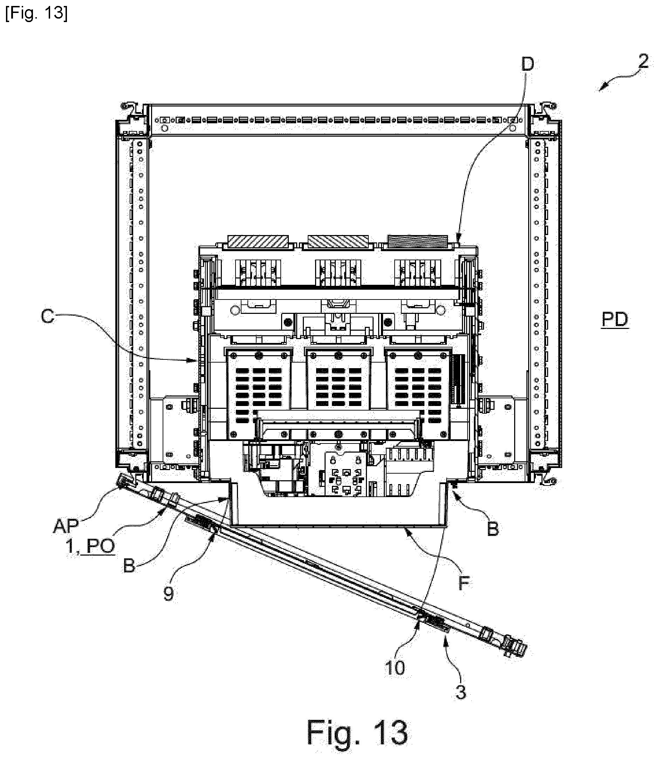

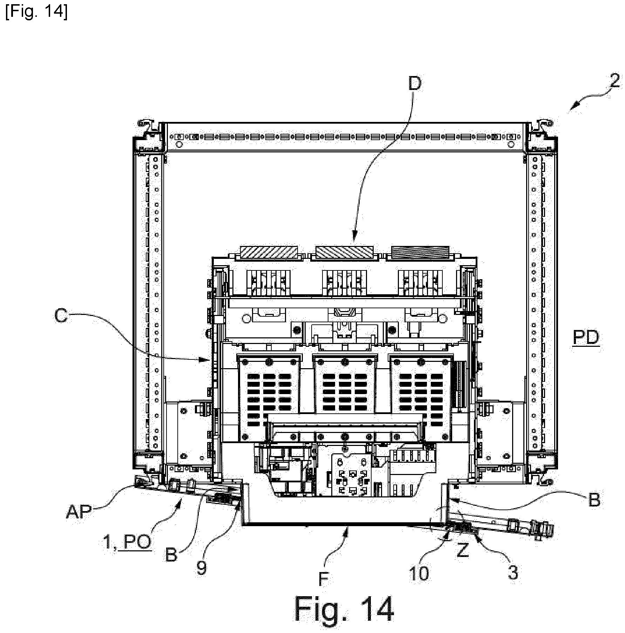

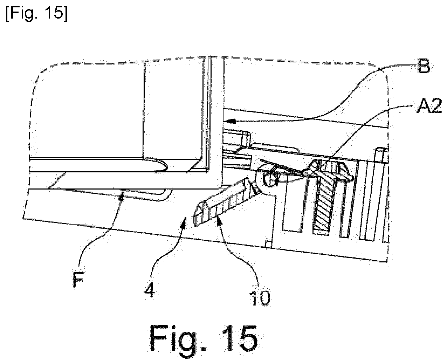

En outre, le premier volet 9 et le deuxième volet 10 permettent aussi l'ouverture et la fermeture de la porte 1 quelle que soit la position de l'appareillage électrique de protection D débrochable relativement à son châssis C, c'est-à-dire aussi bien dans la position connectée PC qui est illustrée à la figure 12, que dans la position déconnectée PD qui est illustrée aux figures 13 et 14. En effet, étant donné que dans la position déconnectée PD, la face avant F est davantage saillante dans l'ouverture principale 4 que dans la position connectée PC, il existe un passage critique à franchir qui est visible à la figure 14 à l'ouverture ou la fermeture de la porte 1. Etant donné que le premier volet 9 et le deuxième volet 10 peuvent pivoter, le passage de la face avant F au travers de l'ouverture principale 4 n'est pas gêné par le premier volet 9 et le deuxième volet 10 et se fait donc sans aucun blocage. Le détail Z des figures 14 et 15 illustre plus particulièrement l'aptitude à pivoter du deuxième volet 10 pour permettre le passage de la face avant F au travers de l'ouverture principale 4 dans ces conditions.

Enfin, cette solution d'accessoire de protection selon l'invention avec le premier volet 9 et le deuxième volet 10 permet également de compenser les défauts de positionnement de l'appareillage électrique de protection D dans l'armoire électrique 2 ce qui conduit à simplifier le montage du châssis C de l'appareillage électrique de protection D dans l'armoire électrique 2 qui ne doit plus être aussi précis que dans l'art antérieur.

De préférence, le cadre 3 est une pièce d'un seul tenant de préférence obtenue par moulage. Le cadre 3 est de préférence en matériau polymère tel que du plastique. Ce matériau est de préférence rigide, mais cet exemple n'est pas limitatif et le matériau peut être également souple.

Le cadre 3 comprend de préférence une interface avant 26 et une interface de montage 27 disposée à l'opposé de l'interface avant 26. L'interface de montage 27 est destinée à être montée sur la porte 1, sans être visible de la face extérieure 28 de la porte 1, tandis que l'interface avant 26 est visible sur la face extérieure 28. L'interface avant 26 est de préférence lisse et l'interface de montage 27 est de préférence nervurée.

L'ouverture principale 4 est de préférence de forme rectangulaire.

Les première, deuxième, troisième, quatrième bordures 5, 6, 7, 8 présentent chacune de préférence une section rectangulaire.

Le premier volet 9 et le deuxième volet 10 présentent chacun une forme essentiellement plane et rectangulaire. De préférence, le premier volet 9 et le deuxième volet 10 comportent chacun une première face 29 qui est lisse et du côté de l'interface avant 26 et une deuxième face 30 qui est nervurée et du côté de l'interface de montage 27.

La position initiale PI du premier volet 9 correspond de préférence à une position du premier volet 9 dans laquelle celui-ci occulte une portion de l'ouverture principale 4 à proximité de la première bordure 5.

La position d'ouverture maximale du premier volet 9 correspond de préférence à une position du premier volet 9 dans laquelle ce dernier vient en butée contre l'épaisseur de la première bordure 5.

La position initiale PI du deuxième volet 10 correspond de préférence à une position du deuxième volet 10 dans laquelle celui-ci occulte une portion de l'ouverture principale 4 à proximité de la deuxième bordure 6.

La position d'ouverture maximale du deuxième volet 10 correspond de préférence à une position du deuxième volet 10 dans laquelle ce dernier vient en butée contre l'épaisseur de la deuxième bordure 6.

Un premier sous ensemble formé par le premier organe de rappel 11 et le premier volet 9 est de préférence monté sur l'interface de montage 27 par des premiers moyens de fixation. Par exemple, le premier volet 9 est monté sur l'interface de montage 27 notamment par une première liaison pivot.

Le deuxième sous ensemble formé par le deuxième organe de rappel 12 et le deuxième volet 10 est de préférence monté sur l'interface de montage 27 par des deuxièmes moyens de fixation. Par exemple, le deuxième volet 10 est monté sur l'interface de montage 27 notamment par une deuxième liaison pivot.

De préférence, ledit accessoire de protection comprend en outre une entretoise de séparation 13 reliant la première bordure 5 et la deuxième bordure 6 et s'étendant longitudinalement selon la deuxième direction D2, ladite entretoise de séparation 13 étant configurée pour séparer l'ouverture principale 4 en deux, en une première ouverture 14 et une deuxième ouverture 15.

Avantageusement, l'entretoise de séparation 13 permet de diviser l'ouverture principale 4 en deux ouvertures, à savoir une première ouverture 14 et une deuxième ouverture 15. Ainsi, selon la première possibilité, si l'appareillage électrique de protection D est débrochable alors la face avant F peut traverser la première ouverture 14 entre la position connectée PC, comme le montre la figure 7, et la position déconnectée PD, comme le montre la figure 8. L'interface I de commande de la position est accessible de la deuxième ouverture 15 et reste fixe relativement au châssis C. En revanche, si selon la deuxième possibilité l'appareillage électrique de protection D est fixe et selon un exemple non illustré, alors la face avant F est accessible par la première ouverture 14 et reste fixe relativement au châssis C.

Dans ce cas, le premier volet 9 occulte une portion de la première ouverture 14 à proximité de la première bordure 5 et le deuxième volet 10 occulte une portion de la première ouverture 14 à proximité de la deuxième bordure 6. Le cas échéant, le troisième volet 17 décrit ci-après occulte une portion de la deuxième ouverture 15 à proximité de la première bordure 5 et le quatrième volet 18 décrit ci-après occulte une portion de la deuxième ouverture 15 à proximité de la deuxième bordure 6.

De préférence, l'entretoise de séparation 13 présente une section rectangulaire.

La première ouverture 14 présente une forme apte et destinée à entourer avec un jeu la face avant F de l'appareillage électrique de protection D et est de préférence de forme rectangulaire.

Le premier volet 9 et le deuxième volet 10 permettent de recouvrir ce jeu au niveau des bords latéraux B de la face avant F. Les dimensions du premier volet 9 et du deuxième volet 10, et notamment leur largeur, peuvent être adaptées et modifiées en fonction des dimensions du jeu à recouvrir qui peut également varier en fonction notamment des dimensions de l'appareillage électrique de protection D.

La deuxième ouverture 15 présente une forme apte et destinée à entourer avec un jeu l'interface I de commande de la position de l'appareillage électrique de protection D et est de préférence de forme rectangulaire.

Le troisième volet 17 et le quatrième volet 18 décrits ci-après permettent de recouvrir ce jeu au niveau des bords latéraux de l'interface I de commande de la position.

La première ouverture 14 est de préférence plus grande que la deuxième ouverture 15.

De préférence, le premier volet 9 présente une première longueur LV1 inférieure à une longueur LB1 de la première bordure 5 et le deuxième volet 10 présente une deuxième longueur LV2 inférieure à une longueur LB2 de la deuxième bordure 6 et le premier volet 9 et le deuxième volet 10 sont saillants dans la première ouverture 14.

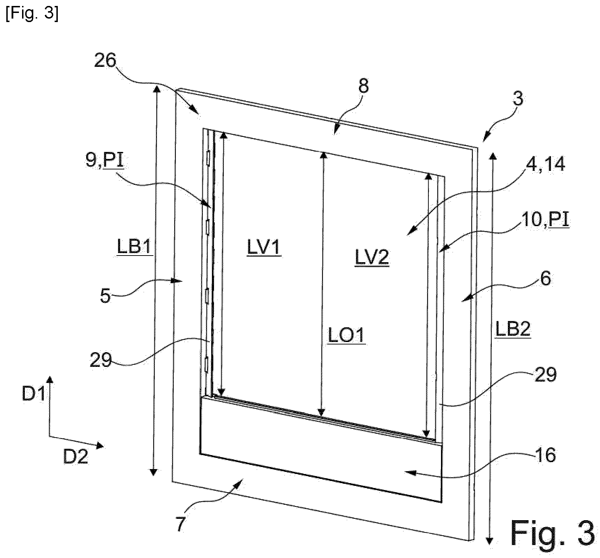

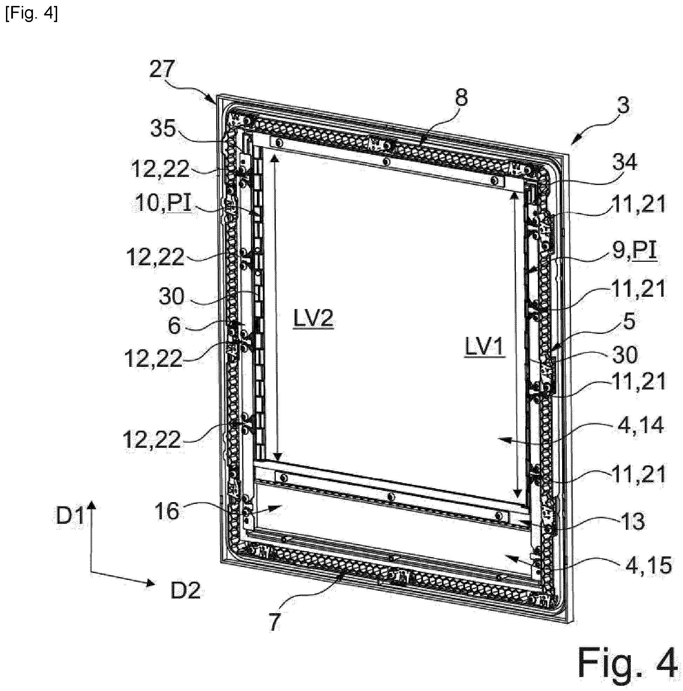

Avantageusement, selon une première variante de réalisation de l'invention qui est illustrée aux figures 3 et 4, l'accessoire de protection comprend uniquement deux volets, à savoir le premier volet 9 et le deuxième volet 10 qui sont saillants dans la première ouverture 14. Cette variante de réalisation est adaptée pour un appareillage électrique de protection D fixe selon la deuxième possibilité.

De préférence, la deuxième ouverture 15 est fermée par un obturateur 16.

Avantageusement, l'obturateur 16 permet de recouvrir au moins la deuxième ouverture 15 qui n'est pas utile, car l'appareillage électrique de protection D ne dispose dans ce cas pas d'une interface I de commande de la position.

Selon un autre possibilité et comme l'illustre la figure 3, l'obturateur 16 permet de recouvrir à la fois la deuxième ouverture 15 et l'entretoise de séparation 13.

L'obturateur 16 présente de préférence une forme essentiellement plane et rectangulaire. L'obturateur 16 peut être fixé au cadre 3 par des moyens de fixation par exemple du type par emboîtement ou par clippage.

De préférence et comme l'illustre la figure 3, la première longueur LV1 du premier volet 9 et la deuxième longueur LV2 du deuxième volet 10 sont égales à une longueur LO1 de la première ouverture 14.

De préférence, selon une deuxième variante de réalisation de l'invention, l'accessoire de protection comprend en outre au moins :
un troisième volet 17 configuré pour occulter partiellement la deuxième ouverture 15 dans une position initiale PI et étant monté mobile autour du premier axe de rotation A1 parallèle sur la première bordure 5 entre la position initiale PI et la position d'ouverture maximale,
un quatrième volet 18 configuré pour occulter partiellement la deuxième ouverture 15 dans une position initiale PI et étant monté mobile autour du deuxième axe de rotation A2 sur la deuxième bordure 6 entre la position initiale PI et la position d'ouverture maximale,
un troisième organe de rappel 19 configuré pour permettre le retour automatique de la position d'ouverture maximale vers la position initiale PI du troisième volet 17,
un quatrième organe de rappel 20 configuré pour permettre le retour automatique de la position d'ouverture maximale vers la position initiale PI du quatrième volet 18.

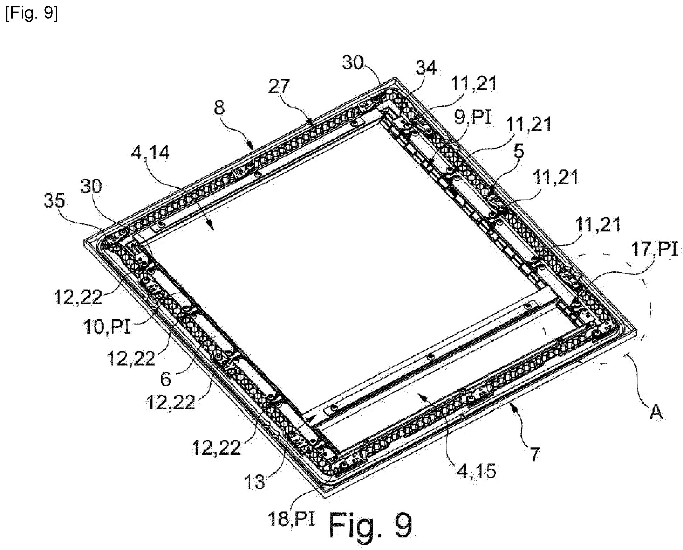

Avantageusement, selon la deuxième variante de réalisation de l'invention qui est illustrée aux figures 1, 2, 5 à 16, l'accessoire de protection comprend en tout quatre volets, à savoir le premier volet 9 et le deuxième volet 10 qui sont saillants dans la première ouverture 14 et le troisième volet 17 et le quatrième volet 18 qui sont saillants dans la deuxième ouverture 15. Cette variante de réalisation est adaptée pour un appareillage électrique de protection D débrochable selon la première possibilité.

Le troisième volet 17 et le quatrième volet 18 présentent par exemple chacun une forme essentiellement plane et rectangulaire. De préférence, le troisième volet 17 et le quatrième volet 18 comportent chacun une première face 29 qui est lisse et du côté de l'interface avant 26 et une deuxième face 30 qui est nervurée et du côté de l'interface de montage 27.

La largeur du troisième volet 17 et la largeur du quatrième volet 18 peuvent être égales ou différente respectivement de la largeur du premier volet 9 et de la largeur du deuxième volet 10.

La position initiale PI du troisième volet 17 correspond de préférence à une position du troisième volet 17 dans laquelle celui-ci occulte une portion de la deuxième ouverture 15 à proximité de la première bordure 5.

La position initiale PI du quatrième volet 18 correspond de préférence à une position du quatrième volet 18 dans laquelle celui-ci occulte une portion de la deuxième ouverture 15 à proximité de la deuxième bordure 6.

Un troisième sous ensemble formé par le troisième organe de rappel 19 et le troisième volet 17 est de préférence monté sur l'interface de montage 27 par des troisièmes moyens de fixation. Par exemple, le troisième volet 17 est monté sur l'interface de montage 27 notamment par une troisième liaison pivot 31.

Le quatrième sous ensemble formé par le quatrième organe de rappel 20 et le quatrième volet 18 est de préférence monté sur l'interface de montage 27 par des quatrièmes moyens de fixation. Par exemple, le quatrième volet 18 est monté sur l'interface de montage 27 notamment par une quatrième liaison pivot.

Le troisième volet 17 est de préférence une image miroir du quatrième volet 18.

Le troisième volet 17 peut être marqué d'un premier marquage 32 sur sa deuxième face 30, qui consiste par exemple au moins en un symbole, tel que la lettre R.

Le quatrième volet 18 peut être marqué d'un deuxième marquage 33 sur sa deuxième face 30, qui consiste par exemple au moins en un symbole, tel que la lettre L.

Avantageusement, il est aisé de distinguer le troisième volet 17 du quatrième volet 18, notamment lors de la fabrication.

De préférence, le troisième volet 17 présente une troisième longueur LV3 inférieure à la longueur LB1 de la première bordure 5 et à la première longueur LV1 du premier volet 9 et le quatrième volet 18 présente une quatrième longueur LV4 inférieure à la longueur LB2 de la deuxième bordure 6 et à la deuxième longueur LV2 du deuxième volet 10 et le troisième volet 17 et le quatrième volet 18 sont saillants dans la deuxième ouverture 15.

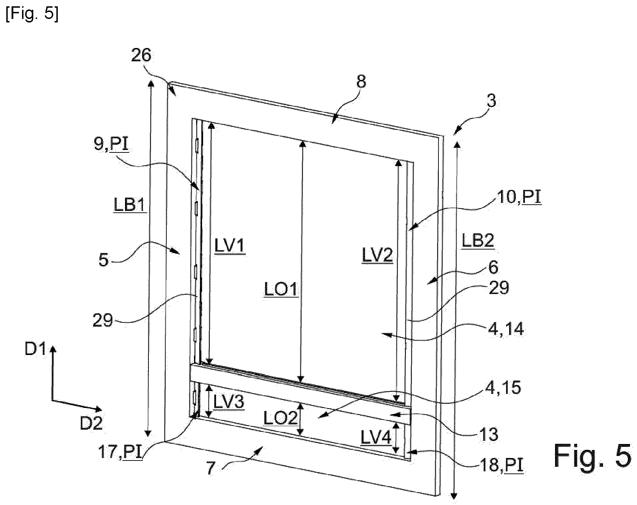

De préférence et comme l'illustre la figure 5, la première longueur LV1 du premier volet 9 et la deuxième longueur LV2 du deuxième volet 10 sont égales à une longueur LO1 de la première ouverture 14 et la troisième longueur LV3 du troisième volet 17 et la quatrième longueur LV4 du quatrième volet 18 sont égales à une longueur LO2 de la deuxième ouverture 15.

De préférence, le premier organe de rappel 11 et le deuxième organe de rappel 12 comportent respectivement au moins un premier ressort à lame 21 associé à au moins une première came du premier volet 9 et au moins un deuxième ressort à lame 22 associé à au moins une deuxième came.

Avantageusement et comme l'illustrent les figures 7 et 8, ledit au moins un premier ressort à lame 21 et ledit au moins un deuxième ressort à lame 22 permettent respectivement de ramener en permanence le premier volet 9 et deuxième volet 10 dans leur position initiale **PI** afin de garantir que le premier volet 9 et deuxième volet 10 restent en contact avec les bords latéraux B de la face avant F de l'appareillage électrique de protection D et ainsi garantir une protection d'indice IP3X.

Préférentiellement, ledit au moins un premier ressort à lame 21 et ledit au moins un deuxième ressort à lame 22 sont en métal, de préférence en acier.

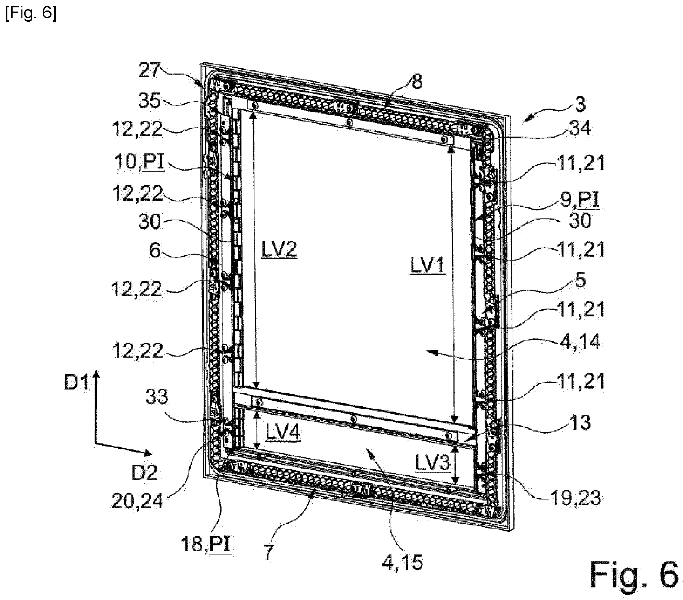

De préférence, dans les exemples illustrés à la figure 4 et à la figure 6, le premier organe de rappel 11 comprend quatre premiers ressorts à lame 21 qui sont répartis uniformément sur la première longueur LV1 du premier volet 9 et le deuxième organe de rappel 12 comprend quatre deuxièmes ressorts à lame 22 qui sont répartis à équidistance sur la deuxième longueur LV2 du deuxième volet 10.

De préférence, le troisième organe de rappel 19 et le quatrième organe de rappel 20 comportent respectivement au moins un troisième ressort à lame 23 associé à au moins une troisième came 25 et au moins un quatrième ressort à lame 24 associé à au moins une quatrième came.

Avantageusement, et comme l'illustrent les figures 7 et 8, ledit au moins un troisième ressort à lame 23 et ledit au moins un quatrième ressort à lame 24 permettent respectivement de ramener en permanence le troisième volet 17 et le quatrième volet 18 dans leur position initiale PI afin de garantir que le troisième volet 17 et le quatrième volet 18 restent en contact avec les bords latéraux de l'interface I de l'appareillage électrique de protection D et ainsi garantir une protection d'indice IP3X.

Préférentiellement, ledit au moins un troisième ressort à lame 23 et ledit au moins un quatrième ressort à lame 24 sont en métal de préférence en acier.

De préférence, dans l'exemple illustré à la figure 6, le troisième organe de rappel 19 comprend un seul troisième ressort à lame 23 qui est situé sensiblement au milieu de la troisième longueur LV3 du troisième volet 17 et le quatrième organe de rappel 20 comprend de préférence un seul quatrième ressort à lame 24 qui est situé sensiblement au milieu de la quatrième longueur LV4 du quatrième volet 18.

De préférence et pour faciliter la conception, une première bande métallique 34 comprend les quatre premiers ressorts à lame 21 et le troisième ressort à lame 23. En effet, la première bande métallique 34 peut comprendre cinq languettes équidistantes par exemple obtenues par découpe et formant les quatre premiers ressorts à lame 21 et le troisième ressort à lame 23.

La première bande métallique 34 est de préférence fixée à l'interface de montage 27 au niveau de la première bordure 5 par cinq ensembles de moyens de fixation.

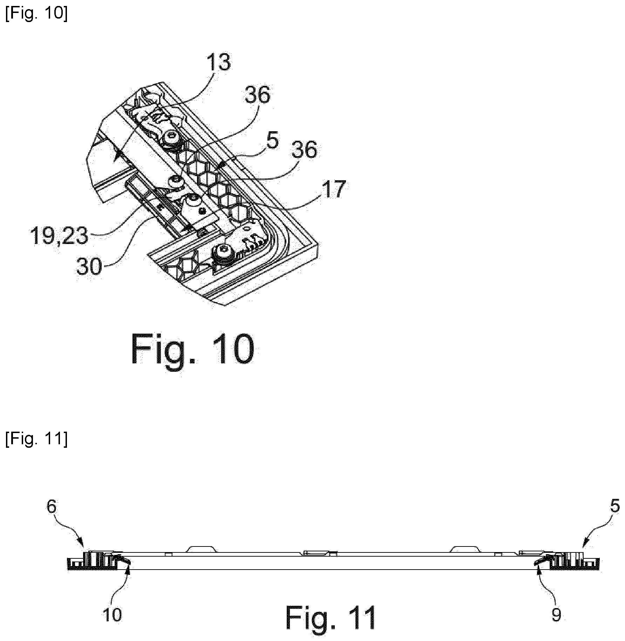

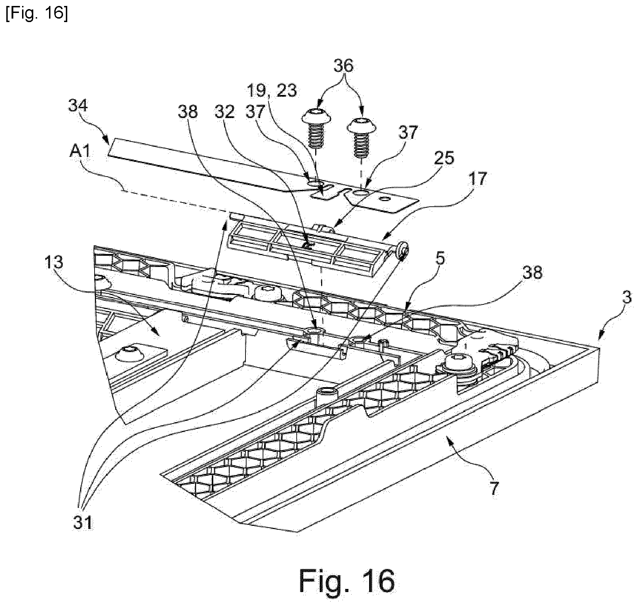

Comme l'illustrent notamment les figures 10 et 16, un tel ensemble de moyens de fixation comporte par exemple deux vis 36 pouvant être vissées au travers de deux orifices 37 situés de part et d'autre de la languette et de deux trous 38 ménagés dans l'interface de montage 27 au niveau de la première bordure 5.

De manière analogue et pour faciliter la conception, une deuxième bande métallique 35 comprend les quatre deuxièmes ressorts à lame 22 et le quatrième ressort à lame 24. En effet, la deuxième bande métallique 35 peut comprendre cinq languettes équidistantes par exemple obtenues par découpe et formant les quatre deuxièmes ressorts à lame 22 et le quatrième ressort à lame 24.

La deuxième bande métallique 35 est de préférence fixée à l'interface de montage 27 au niveau de la deuxième bordure 6 par cinq ensembles de moyens de fixation. Dans ce cas, un tel ensemble de moyens de fixation comporte par exemple deux vis 36 pouvant être vissées au travers de deux orifices 37 situés de part et d'autre de la languette et de deux trous 38 ménagés dans l'interface de montage 27 au niveau de la deuxième bordure 6.

Selon un exemple non représenté, la troisième bordure 7 et la quatrième bordure 8 peuvent chacune être munies d'un joint d'étanchéité qui s'étend sur leur longueur par exemple en caoutchouc qui est saillant respectivement dans la deuxième ouverture 15 et dans la première ouverture 14. Le cas échéant, l'entretoise de séparation 13 peut être munie de deux joints d'étanchéité qui s'étendent sur sa longueur par exemple en caoutchouc et qui sont respectivement saillants dans la première ouverture 14 et dans la deuxième ouverture 15.

Cette configuration permet de garantir une protection de préférence d'indice IP 3X sur l'ensemble du pourtour de la face avant F de l'appareillage électrique de protection D et le cas échéant sur l'ensemble du pourtour de l'interface I de commande de la position.

L'invention concerne une porte 1 pour armoire électrique comprenant une fenêtre configurée pour former un passage d'une face avant F d'un appareillage électrique de protection D.

Conformément à l'invention la porte 1 comprend ledit accessoire de protection selon l'invention et tel que décrit précédemment et le cadre 3 est monté sur la fenêtre.

L'invention concerne une armoire électrique 2 comprenant la porte 1 mobile en rotation autour d'un axe de pivotement AP entre une position fermée PF et une position ouverte PO. Conformément à l'invention, ladite armoire électrique 2 est caractérisée en ce que ladite porte 1 est selon l'invention et telle que décrite précédemment.

L'invention concerne un ensemble comprenant l'armoire électrique 2 comprenant ledit accessoire de protection et ledit appareillage électrique de protection D, ledit appareillage électrique de protection D comprenant un châssis C et une partie puissance comportant une face avant F, laquelle partie puissance étant apte et destinée à être reçue dans le châssis C, en étant mobile relativement au châssis C entre une position connectée PC et une position déconnectée PD.

Conformément à l'invention, ledit ensemble est caractérisé en ce que ladite armoire électrique 2 est selon l'invention et telle que décrite précédemment, ledit accessoire est selon l'invention et tel que décrit précédemment et en ce que :
dans la position fermée PF de la porte 1 et dans la position connectée PC de l'appareillage électrique de protection D, la face avant F est entourée par le cadre 3 et est saillante dans la première ouverture 14, et le premier volet 9 et le deuxième volet 10 formant une barrière configurée pour empêcher de donner accès à l'appareillage électrique de protection D, au moins par deux bords latéraux B de la face avant F,
dans la position fermée PF de la porte 1 et dans la position déconnectée PD de l'appareillage électrique de protection D, la face avant F est entourée par le cadre 3 et est davantage saillante de la première ouverture 14 que dans la position connectée PC, et le premier volet 9 et le deuxième volet 10 formant une barrière configurée pour empêcher de donner accès à l'appareillage électrique de protection D, au moins par deux bords latéraux B de la face avant F.

Par exemple lorsque l'appareillage électrique de protection D est en position déconnectée PD, il sort d'une distance de préférence égale à 48 millimètres en plus relativement à sa position dans la position connectée PC.

De préférence, lors du passage de la position fermée PF à la position ouverte PO de la porte 1 ou inversement et dans la position déconnectée PD de l'appareillage électrique de protection D, le premier volet 9 et le deuxième volet 10 sont configurés pour être pivotés pour permettre le passage de la face avant F dans la première ouverture 14.

Avantageusement, lors du passage de la position fermée PF à la position ouverte PO de la porte 1 ou inversement, les mouvements de rotation du premier volet 9 et du deuxième volet 10 évitent ainsi l'endommagement de ceux-ci par une usure provoquée par des frottements répétés ce qui garantit le maintien de l'indice de protection IP3X au cours du temps.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention, qui est défini par les revendications.

## Revendications

1. Accessoire de protection pour porte (1) d'armoire électrique (2), ledit accessoire de protection comportant un cadre (3), de préférence de forme rectangulaire, comprenant au moins :
- une ouverture principale (4),
- une première bordure (5) et une deuxième bordure (6) s'étendant longitudinalement selon une première direction (D1), parallèles entre elles et espacées l'une de l'autre,
- une troisième bordure (7) et une quatrième bordure (8) s'étendant longitudinalement selon une deuxième direction (D2) sensiblement perpendiculaire à la première direction (D1), parallèles entre elles, espacées l'une de l'autre et reliant chacune la première bordure (5) à la deuxième bordure (6),
la première bordure (5), la deuxième bordure (6), la troisième bordure (7) et la quatrième bordure (8) délimitant ladite ouverture principale (4),
ledit accessoire de protection est **caractérisé en ce qu'**il comprend en outre au moins :
- un premier volet (9) configuré pour occulter partiellement l'ouverture principale (4) dans une position initiale (PI) et étant monté mobile autour d'un premier axe de rotation (A1) parallèle à la première direction (D1) sur la première bordure (5) entre la position initiale (PI) et une position d'ouverture maximale,
- un deuxième volet (10) configuré pour occulter partiellement l'ouverture principale (4) dans une position initiale (PI) et étant monté mobile autour d'un deuxième axe de rotation (A2) parallèle à la première direction (D1) sur la deuxième bordure (6) entre la position initiale (PI) et la position d'ouverture maximale,
- un premier organe de rappel (11) configuré pour permettre le retour automatique de la position d'ouverture maximale vers la position initiale (PI) du premier volet (9),
- un deuxième organe de rappel (12) configuré pour permettre le retour automatique de la position d'ouverture maximale vers la position initiale (PI) du deuxième volet (10).

2. Accessoire de protection selon la revendication 1, **caractérisé en ce qu'**il comprend en outre une entretoise de séparation (13) reliant la première bordure (5) et la deuxième bordure (6) et s'étendant longitudinalement selon la deuxième direction (D2), ladite entretoise de séparation (13) étant configurée pour séparer l'ouverture principale (4) en deux, en une première ouverture (14) et une deuxième ouverture (15).

3. Accessoire de protection selon la revendication 2, **caractérisé en ce que** le premier volet (9) présente une première longueur (LV1) inférieure à une longueur (LB1) de la première bordure (5) et le deuxième volet (10) présente une deuxième longueur (LV2) inférieure à une longueur (LB2) de la deuxième bordure (6) et **en ce que** le premier volet (9) et le deuxième volet (10) sont saillants dans la première ouverture (14).

4. Accessoire de protection selon la revendication 3, **caractérisé en ce que** la deuxième ouverture (15) est fermée par un obturateur (16).

5. Accessoire de protection selon la revendication 3, **caractérisé en ce qu'**il comprend en outre au moins :
- un troisième volet (17) configuré pour occulter partiellement la deuxième ouverture (15) dans une position initiale (PI) et étant monté mobile autour du premier axe de rotation (A1) parallèle sur la première bordure (5) entre la position initiale (PI) et la position d'ouverture maximale,
- un quatrième volet (18) configuré pour occulter partiellement la deuxième ouverture (15) dans une position initiale (PI) et étant monté mobile autour du deuxième axe de rotation (A2) sur la deuxième bordure (6) entre la position initiale (PI) et la position d'ouverture maximale,
- un troisième organe de rappel (19) configuré pour permettre le retour automatique de la position d'ouverture maximale vers la position initiale (PI) du troisième volet (17),
- un quatrième organe de rappel (20) configuré pour permettre le retour automatique de la position d'ouverture maximale vers la position initiale (PI) du quatrième volet (18).

6. Accessoire de protection selon la revendication 5, **caractérisé en ce que** le troisième volet (17) présente une troisième longueur (LV3) inférieure à la longueur (LB1) de la première bordure (5) et à la première longueur (LV1) du premier volet (9) et **en ce que** le quatrième volet (18) présente une quatrième longueur (LV4) inférieure à la longueur (LB2) de la deuxième bordure (6) et à la deuxième longueur (LV2) du deuxième volet (10) et **en ce que** le troisième volet (17) et le quatrième volet (18) sont saillants dans la deuxième ouverture (15).

7. Accessoire de protection selon l'une quelconque des revendications 1 à 6, **caractérisé en ce que** le premier organe de rappel (11) et le deuxième organe de rappel (12) comportent respectivement au moins un premier ressort à lame (21) associé à au moins une première came du premier volet (9) et au moins un deuxième ressort à lame (22) associé à au moins une deuxième came.

8. Accessoire de protection selon les revendications 5 et 7 **caractérisé en ce que** le troisième organe de rappel (19) et le quatrième organe de rappel (20) comportent respectivement au moins un troisième ressort à lame (23) associé à au moins une troisième came (25) et au moins un quatrième ressort à lame (24) associé à au moins une quatrième came.

9. Porte (1) pour armoire électrique (2) comprenant une fenêtre configurée pour former un passage d'une face avant (F) d'un appareillage électrique de protection (D), **caractérisé en ce que** la porte (1) comprend ledit accessoire de protection selon l'une quelconque des revendications 1 à 8 et **en ce que** le cadre (3) est monté sur la fenêtre.

10. Armoire électrique (2) comprenant la porte (1) mobile en rotation autour d'un axe de pivotement (AP) entre une position fermée (PF) et une position ouverte (PO), **caractérisée en ce que** ladite porte (1) est selon la revendication 9.

11. Ensemble comprenant l'armoire électrique (2) comprenant ledit accessoire de protection et ledit appareillage électrique de protection (D), ledit appareillage électrique de protection (D) comprenant un châssis (C) et une partie puissance comportant une face avant (F), laquelle partie puissance étant apte et destinée à être reçue dans le châssis (C), en étant mobile relativement au châssis (C) entre une position connectée (PC) et une position déconnectée (PD), **caractérisé en ce que** ladite armoire électrique (2) est selon la revendication 10, ledit accessoire est selon l'une quelconque des revendications 2 à 8 et **en ce que** :
- dans la position fermée (PF) de la porte (1) et dans la position connectée (PC) de l'appareillage électrique de protection (D), la face avant (F) est entourée par le cadre (3) et est saillante dans la première ouverture (14), et le premier volet (9) et le deuxième volet (10) formant une barrière configurée pour empêcher de donner accès à l'appareillage électrique de protection (D), au moins par deux bords latéraux (B) de la face avant (F),
- dans la position fermée (PF) de la porte (1) et dans la position déconnectée (PD) de l'appareillage électrique de protection (D), la face avant (F) est entourée par le cadre (3) et est davantage saillante de la première ouverture (14) que dans la position connectée (PC), et le premier volet (9) et le deuxième volet (10) formant une barrière configurée pour empêcher de donner accès à l'appareillage électrique de protection (D), au moins par deux bords latéraux (B) de la face avant (F).

12. Ensemble selon la revendication 11, **caractérisé en ce que** lors du passage de la position fermée (PF) à la position ouverte (PO) de la porte (1) ou inversement et dans la position déconnectée (PD) de l'appareillage électrique de protection (D), le premier volet (9) et le deuxième volet (10) sont configurés pour être pivotés pour permettre le passage de la face avant (F) dans la première ouverture (14).

## Patentansprüche

1. Schutzzubehör für eine Tür (1) eines Schaltschranks (2), wobei das Schutzzubehör einen Rahmen (3), vorzugsweise rechteckiger Form, umfasst, beinhaltend mindestens:
- eine Hauptöffnung (4),
- einen ersten Randabschnitt (5) und einen zweiten Randabschnitt (6), die sich längs entlang einer ersten Richtung (D1) zueinander parallel und voneinander beabstandet erstrecken,
- einen dritten Randabschnitt (7) und einen vierten Randabschnitt (8), die sich längs entlang einer zu der ersten Richtung (D1) im Wesentlichen senkrechten zweiten Richtung (D2) zueinander parallel und voneinander beabstandet erstrecken und jeweils den ersten Randabschnitt (5) mit dem zweiten Randabschnitt (6) verbinden,
wobei der erste Randabschnitt (5), der zweite Randabschnitt (6), der dritte Randabschnitt (7) und der vierte Randabschnitt (8) die Hauptöffnung (4) begrenzen,
das Schutzzubehör ist **dadurch gekennzeichnet, dass** es ferner mindestens Folgendes beinhaltet:
- eine erste Klappe (9), die dazu konfiguriert ist, in einer Ausgangsposition (PI) die Hauptöffnung (4) teilweise zu verdecken, und die zwischen der Ausgangsposition (PI) und einer maximalen Öffnungsposition um eine erste Drehachse (A1) parallel zu der ersten Richtung (D1) drehbar an dem ersten Randabschnitt (5) angebracht ist,
- eine zweite Klappe (10), die dazu konfiguriert ist, in einer Ausgangsposition (PI) die Hauptöffnung (4) teilweise zu verdecken, und die zwischen der Ausgangsposition (PI) und der maximalen Öffnungsposition um eine zweite Drehachse (A2) parallel zu der ersten Richtung (D1) drehbar an dem zweiten Randabschnitt (6) angebracht ist,
- ein erstes Rückstellorgan (11), das dazu konfiguriert ist, die automatische Rückkehr der ersten Klappe (9) von der maximalen Öffnungsposition in die Ausgangsposition (PI) zu ermöglichen,
- ein zweites Rückstellorgan (12), das dazu konfiguriert ist, die automatische Rückkehr der zweiten Klappe (10) von der maximalen Öffnungsposition in die Ausgangsposition (PI) zu ermöglichen.

2. Schutzzubehör nach Anspruch 1, **dadurch gekennzeichnet, dass** es ferner einen Trennsteg (13) beinhaltet, der den ersten Randabschnitt (5) und den zweiten Randabschnitt (6) verbindet und sich längs entlang der zweiten Richtung (D2) erstreckt, wobei der Trennsteg (13) dazu konfiguriert ist, die Hauptöffnung (4) in eine erste Öffnung (14) und eine zweite Öffnung (15) zweizuteilen.

3. Schutzzubehör nach Anspruch 2, **dadurch gekennzeichnet, dass** die erste Klappe (9) eine erste Länge (LV1) aufweist, die kleiner als eine Länge (LB1) des ersten Randabschnitts (5) ist, und die zweite Klappe (10) eine zweite Länge (LV2) aufweist, die kleiner als eine Länge (LB2) des zweiten Randabschnitts (6) ist, und dass die erste Klappe (9) und die zweite Klappe (10) in die erste Öffnung (14) ragen.

4. Schutzzubehör nach Anspruch 3, **dadurch gekennzeichnet, dass** die zweite Öffnung (15) durch eine Blende (16) verschlossen ist.

5. Schutzzubehör nach Anspruch 3, **dadurch gekennzeichnet, dass** es ferner mindestens Folgendes beinhaltet:
- eine dritte Klappe (17), die dazu konfiguriert ist, in einer Ausgangsposition (PI) die zweite Öffnung (15) teilweise zu verdecken, und die zwischen der Ausgangsposition (PI) und der maximalen Öffnungsposition parallel zu dem ersten Randabschnitt (5) drehbar um die erste Drehachse (A1) angebracht ist,
- eine vierte Klappe (18), die dazu konfiguriert ist, in einer Ausgangsposition (PI) die zweite Öffnung (15) teilweise zu verdecken, und die zwischen der Ausgangsposition (PI) und der maximalen Öffnungsposition um die zweite Drehachse (A2) drehbar an dem zweiten Randabschnitt (6) angebracht ist,
- ein drittes Rückstellorgan (19), das dazu konfiguriert ist, die automatische Rückkehr der dritten Klappe (17) von der maximalen Öffnungsposition in die Ausgangsposition (PI) zu ermöglichen,
- ein viertes Rückstellorgan (20), das dazu konfiguriert ist, die automatische Rückkehr der vierten Klappe (18) von der maximalen Öffnungsposition in die Ausgangsposition (PI) zu ermöglichen.

6. Schutzzubehör nach Anspruch 5, **dadurch gekennzeichnet, dass** die dritte Klappe (17) eine dritte Länge (LV3) aufweist, die kleiner als die Länge (LB1) des ersten Randabschnitts (5) und die erste Länge (LV1) der ersten Klappe (9) ist, und dass die vierte Klappe (18) eine vierte Länge (LV4) aufweist, die kleiner als die Länge (LB2) des zweiten Randabschnitts (6) und die zweite Länge (LV2) der zweiten Klappe (10) ist, und dass die dritte Klappe (17) und die vierte Klappe (18) in die zweite Öffnung (15) ragen.

7. Schutzzubehör nach einem der Ansprüche 1 bis 6, **dadurch gekennzeichnet, dass** das erste Rückstellorgan (11) und das zweite Rückstellorgan (12) jeweils mindestens eine erste Blattfeder (21), die mit mindestens einem ersten Nocken der ersten Klappe (9) assoziiert ist, bzw. mindestens eine zweite Blattfeder (22), die mit mindestens einem zweiten Nocken assoziiert ist, umfassen.

8. Schutzzubehör nach den Ansprüchen 5 und 7, **dadurch gekennzeichnet, dass** das dritte Rückstellorgan (19) und das vierte Rückstellorgan (20) jeweils mindestens eine dritte Blattfeder (23), die mit mindestens einem dritten Nocken (25) assoziiert ist, bzw. mindestens eine vierte Blattfeder (24), die mit mindestens einem vierten Nocken assoziiert ist, umfassen.

9. Tür (1) für einen Schaltschrank (2), beinhaltend ein Fenster, das dazu konfiguriert ist, einen Durchgang einer Vorderseite (F) eines elektrischen Schutzgeräts (D) zu bilden, **dadurch gekennzeichnet, dass** die Tür (1) das Schutzzubehör nach einem der Ansprüche 1 bis 8 beinhaltet und dass der Rahmen (3) an dem Fenster angebracht ist.

10. Schaltschrank (2), beinhaltend die Tür (1), die zwischen einer geschlossenen Position (PF) und einer geöffneten Position (PO) um eine Schwenkachse (AP) drehbar ist, **dadurch gekennzeichnet, dass** die Tür (1) Anspruch 9 entspricht.

11. Anordnung, beinhaltend den Schaltschrank (2), der das Schutzzubehör und das elektrische Schutzgerät (D) beinhaltet, wobei das elektrische Schutzgerät (D) ein Gestell (C) und ein Leistungsteil mit einer Vorderseite (F) beinhaltet, wobei das Leistungsteil dazu angepasst und bestimmt ist, in dem Gestell (C) aufgenommen zu werden und dabei zwischen einer verbundenen Position (PC) und einer nicht verbundenen Position (PD) relativ zu dem Gestell (C) beweglich zu sein, **dadurch gekennzeichnet, dass** der Schaltschrank (2) Anspruch 10 entspricht, das Zubehör einem der Ansprüche 2 bis 8 entspricht und dass:
- in der geschlossenen Position (PF) der Tür (1) und in der verbundenen Position (PC) des elektrischen Schutzgeräts (D) die Vorderseite (F) von dem Rahmen (3) umgeben ist und in die erste Öffnung (14) ragt und wobei die erste Klappe (9) und die zweite Klappe (10) eine Barriere, die dazu konfiguriert ist, den Zugang zu dem elektrischen Schutzgerät (D) zu verhindern, mindestens durch zwei Seitenränder (B) der Vorderseite (F) bilden,
- in der geschlossenen Position (PF) der Tür (1) und in der nicht verbundenen Position (PD) des elektrischen Schutzgeräts (D) die Vorderseite (F) von dem Rahmen (3) umgeben ist und weiter aus der ersten Öffnung (14) ragt als in der verbundenen Position (PC) und wobei die erste Klappe (9) und die zweite Klappe (10) eine Barriere, die dazu konfiguriert ist, den Zugang zu dem elektrischen Schutzgerät (D) zu verhindern, mindestens durch zwei Seitenränder (B) der Vorderseite (F) bilden.

12. Anordnung nach Anspruch 11, **dadurch gekennzeichnet, dass** beim Übergang von der geschlossenen Position (PF) in die geöffnete Position (PO) der Tür (1) oder umgekehrt und in der nicht verbundenen Position (PD) des elektrischen Schutzgeräts (D) die erste Klappe (9) und die zweite Klappe (10) dazu konfiguriert sind, geschwenkt zu werden, um den Durchgang der Vorderseite (F) in der ersten Öffnung (14) zu ermöglichen.

## Claims

1. Protection accessory for a door (1) of an electrical cabinet (2), said protection accessory comprising a frame (3), preferably rectangular in form, comprising at least:
- a main opening (4),
- a first border (5) and a second border (6) extending longitudinally in a first direction (D1), parallel with and spaced apart from one another,
- a third border (7) and a fourth border (8) extending longitudinally in a second direction (D2) substantially perpendicular to the first direction (D1), parallel with and spaced apart from one another and each connecting the first border (5) to the second border (6),
the first border (5), the second border (6), the third border (7) and the fourth border (8) delimiting said main opening (4),
said protection accessory is **characterized in that** it also comprises at least:
- a first flap (9) configured to partially block the main opening (4) in an initial position (PI) and mounted movably around a first axis of rotation (A1) parallel to the first direction (D1) on the first border (5) between the initial position (PI) and a maximally open position,
- a second flap (10) configured to partially block the main opening (4) in an initial position (PI) and mounted movably around a second axis of rotation (A2) parallel to the first direction (D1) on the second border (6) between the initial position (PI) and the maximally open position,
- a first return element (11) configured to allow the automatic return of the first flap (9) from the maximally open position to the initial position (PI),
- a second return element (12) configured to allow the automatic return of the second flap (10) from the maximally open position to the initial position (PI).

2. Protection accessory according to Claim 1, **characterized in that** it also comprises a dividing strut (13) connecting the first border (5) and the second border (6) and extending longitudinally in the second direction (D2), said dividing strut (13) being configured to divide the main opening (4) into two, a first opening (14) and a second opening (15).

3. Protection accessory according to Claim 2, **characterized in that** the first flap (9) has a first length (LV1) smaller than a length (LB1) of the first border (5), and the second flap (10) has a second length (LV2) smaller than a length (LB2) of the second border (6), and **in that** the first flap (9) and the second flap (10) protrude into the first opening (14).

4. Protection accessory according to Claim 3, **characterized in that** the second opening (15) is closed by a blocking element (16).

5. Protection accessory according to Claim 3, **characterized in that** it also comprises at least:
- a third flap (17) configured to partially block the second opening (15) in an initial position (PI) and mounted movably around the first axis of rotation (A1) parallel to the first border (5) between the initial position (PI) and the maximally open position,
- a fourth flap (18) configured to partially block the second opening (15) in an initial position (PI) and mounted movably around the second axis of rotation (A2) on the second border (6) between the initial position (PI) and the maximally open position,
- a third return element (19) configured to allow the automatic return of the third flap (17) from the maximally open position to the initial position (PI),
- a fourth return element (20) configured to allow the automatic return of the fourth flap (18) from the maximally open position to the initial position (PI).

6. Protection accessory according to Claim 5, **characterized in that** the third flap (17) has a third length (LV3) smaller than the length (LB1) of the first border (5) and the first length (LV1) of the first flap (9), and **in that** the fourth flap (18) has a fourth length (LV4) smaller than the length (LB2) of the second border (6) and the second length (LV2) of the second flap (10), and **in that** the third flap (17) and the fourth flap (18) protrude into the second opening (15).

7. Protection accessory according to any one of Claims 1 to 6, **characterized in that** the first return element (11) and the second return element (12) respectively comprise at least one first leaf spring (21) associated with at least one first cam of the first flap (9), and at least one second leaf spring (22) associated with at least one second cam.

8. Protection accessory according to Claims 5 and 7, **characterized in that** the third return element (19) and the fourth return element (20) respectively comprise at least one third leaf spring (23) associated with at least one third cam (25), and at least one fourth leaf spring (24) associated with at least one fourth cam.

9. Door (1) for an electrical cabinet (2) comprising a window configured to form a passage of a front face (F) of an electrical protection device (D), **characterized in that** the door (1) comprises said protection accessory according to any one of Claims 1 to 8, and **in that** the frame (3) is mounted on the window.

10. Electrical cabinet (2) comprising the door (1) movable in rotation around a pivot axis (AP) between a closed position (PF) and an open position (PO), **characterized in that** said door (1) is in accordance with Claim 9.

11. Assembly comprising the electrical cabinet (2) comprising said protection accessory and said electrical protection device (D), said electrical protection device (D) comprising a chassis (C) and a power part comprising a front face (F), which power part is able and intended to be received in the chassis (C) and is movable relative to the chassis (C) between a connected position (PC) and a disconnected position (PD), **characterized in that** said electrical cabinet (2) is in accordance with Claim 10, said accessory is in accordance with any one of Claims 2 to 8, and **in that**:
- in the closed position (PF) of the door (1) and in the connected position (PC) of the electrical protection device (D), the front face (F) is surrounded by the frame (3) and protrudes into the first opening (14), and the first flap (9) and the second flap (10) form a barrier configured to prevent giving access to the electrical protection device (D), at least via two lateral edges (B) of the front face (F),
- in the closed position (PF) of the door (1) and in the disconnected position (PD) of the electrical protection device (D), the front face (F) is surrounded by the frame (3) and protrudes further from the first opening (14) than in the connected position (PC), and the first flap (9) and the second flap (10) form a barrier configured to prevent giving access to the electrical protection device (D), at least via two lateral edges (B) of the front face (F).

12. Assembly according to Claim 11, **characterized in that** on passage of the door (1) from the closed position (PF) to the open position (PO) or conversely, and in the disconnected position (PD) of the electrical protection device (D), the first flap (9) and the second flap (10) are configured to be pivoted in order to allow the passage of the front face (F) into the first opening (14).
